# EUROPÄISCHE PATENTANMELDUNG

(11) **EP 1 217 868 A2**
(43) Veröffentlichungstag der Anmeldung: **26.06.2002**
(21) Anmeldenummer: 01440414.9
(22) Anmeldetag: 10.12.2001
(51) Int. Cl.: H04Q 11/04, H04Q 11/00

(54) **Optischer Crossconnect zum wahlfreien Verschalten von Nachrichtensignalen unterschiedlicher Multiplexebenen**

(30) Priorität: 23.12.2000 DE 10065001
(71) Anmelder: ALCATEL, 75008 Paris (FR)
(72) Erfinder: Beisel, Werner, 71638 Ludwigsburg (DE); Wettengel, Heinz, 71254 Ditzingen (DE); Hägele, Dr. Volker, 71384 Schorndorf (DE)
(74) Vertreter: Urlichs, Stefan, Dipl.-Phys.

(57) **Zusammenfassung**

Ein optischer Crossconnect (OCX), der zum Schalten sogenannter Optical Channels unterschiedlicher Multiplexebenen mit jeweils festgelegter Bitrate ausgebildet ist, besitzt eine Anzahl von Eingangs/Ausgangs-Anschlüssen (IO1, IO2, IO3) die jeweils angepaßt sind, Nachrichtensignale einer bestimmten Multiplexebene zu senden und zu empfangen. Der Crossconnect besitzt weiter eine Raum-Schaltmatrix (S), die angepaßt ist, Nachrichtensignale der niedrigsten Multiplexebene zu schalten. Eingangs/Ausgangs-Anschlüsse (IO1) der niedrigsten Multiplexebene sind direkt mit der Schaltmatrix verbunden und Eingangs/Ausgangs-Anschlüssen (IO2, IO3) der höheren Multiplexebenen sind jeweils über einen Multiplexer (MUX1, MUX2) mit der Schaltmatrix verbunden, der angepaßt ist, eine Anzahl von der Schaltmatrix (S) empfangener Nachrichtensignale der niedrigsten Multiplexebene zu einem Nachrichtensignal der entsprechenden höheren Multiplexebene zu multiplexen und ein von dem jeweiligen Eingangs/Ausgangs-Anschluß (IO2, IO3) empfangenes Nachrichtensignal der höheren Multiplexebene in eine Anzahl Nachrichtensignale der niedrigsten Multiplexebene zu demultiplexen und diese einzeln an die Schaltmatrix (S) weiterzuleiten

## Beschreibung

Die Erfindung betrifft einen optischen Crossconnect zum Schalten von Verbindungen in einem optischen Übertragungsnetz, in dem optische Nachrichtensignale unterschiedlicher Multiplexebenen mit jeweils festgelegter Bitrate gesendet werden können, wobei Nachrichtensignale einer höheren Multiplexebene aus Nachrichtensignalen einer niedrigeren Multiplexebene zusammengesetzt sind oder direkt ein Nutzdatensignal enthalten.

In der optischen Nachrichtenübertragung werden derzeit synchrone optische Systeme eingesetzt, die in Europa als SDH (synchrone digitale Hierarchie) und in Nordamerika als SONET (synchronous optical network) bekannt sind. Bei diesen Systeme sind Nachrichtensignale unterschiedlicher Hierarchieebenen definiert, wobei Nachrichtensignale einer höheren Multiplexebene aus Nachrichtensignalen einer niedrigeren Multiplexebene zusammengesetzt sind oder direkt ein Nutzdatensignal enthalten. Die Multiplexhierarchie dieser Systeme ist in ITU-T G.707 Kapitel 6 definiert. Ein Überblick über diese Systeme wird z.B. in dem Artikel "SONET 101" der Fa. Nortel Networks dargestellt, der im Internet unter www.nortel.com/broadband/pdf/sonet 101.pdf heruntergeladen werden kann.

In optischen Nachrichtenübertragungsnetzen werden Crossconnects eingesetzt, deren Aufgabe es ist, Pfade in dem Netz einzurichten. Dazu ist es erforderlich Multiplexeinheiten von jedem Eingang auf jeden Ausgang schalten zu können. Es sind sogenannte 4/3/1 Crossconnects wie z.B. der 1641SX der Firma Alcatel bekannt, die Multiplexeinheiten aller Hierarchieebenen (VC-4, VC3, VC-12 bei SDH) von jedem Eingang auf jeden Ausgang schalten können. Daneben gibt es noch sogenannte 4/4 Crossconnects wie z.B. den 1664SX der Fa. Alcatel, die dafür angepaßt sind, lediglich Multiplexeinheiten der höchsten Hierarchieebene (z.B. bei SDH der VC-4) zu schalten. Kernstück dieser Crossconnects ist eine Raum/Zeit-Schaltmatrix, die mit allen Eingangs/Ausgangs-Anschlüssen verbunden ist. Bei den bekannten Systemen ist diese Schaltmatrix als dreistufige elektrische Schaltmatrix nach Clos ausgeführt (siehe Clos, "A Study of Non-Blocking Switching Networks", Bell System Technical Journal No. 32, 1953, pp. 406-424).

Daneben werden derzeit sogenannte optische Crossconnects entwickelt, die optische Nachrichtensignale beliebigen Formates wie SONET, ATM, IP schalten sollen. Sie enthalten eine zentrale Raum-Schaltmatrix, die für die zu schaltenden Nachrichtensignale transparent sein soll. Ein Beispiel für einen solchen optischen Crossconnect ist in dem Artikel "Cost Effective Optical Networks: The Role of Optical Cross-Connects" von Charles A. Brackett angegeben, der im Internet von der Site www.tellium.com heruntergeladen werden kann.

Neuere Entwicklungen in der optischen Nachrichtenübertragung zielen darauf ab, Nachrichtensignale immer höherer Bitrate zu übertragen. So wird derzeit über eine neue Multiplexhierarchie mit der Bezeichnung "Optical Channel (OCh)" diskutiert. Diese neue Multiplexhierarchie soll Multiplexebenen mit Bitraten von 2,66 Gbit/sec sowie Vielfache davon (Faktor vier), nämlich 10,7x Gbit/sec und 43,x Gbit/sec aufweisen. Die zukünftigen Optical Channels sind besonders für die optische Nachrichtenübertragung im Wellenlängenmultiplex (WDM) vorgesehen.

Für diese Optical Channels werden ebenfalls Crossconnects benötigt, die Nachrichtensignale aller Hierarchieebenen von jedem Eingang zu jedem Ausgang schalten können. Für die Schaltmatrix solcher Crossconnects ist der Ansatz mit dreistufiger elektrischer Raum/Zeit-Matrix nach Clos aufgrund der hohen Bitrate mit vertretbarem Auswand nicht realisierbar. Optische Crossconnects mit transparenter Raum-Schaltmatrix hingegen sind nicht in der Lage, Anschlüsse für Nachrichtensignale einer höheren Multiplexebene mit Anschlüssen für Nachrichtensignale einer niedrigeren Multiplexebene zu verbinden. Anderseits sind solche optischen Crossconnects für die neuen Optical Channels bei weitem nicht kosteneffektiv.

Eine Aufgabe der Erfindung besteht deshalb darin, einen Crossconnect für Optical Channels anzugeben, der volle Konnetktivität für Nachrichtensignale aller Multiplexebenen unterstützt. Eine weitere Aufgabe der Erfindung besteht darin, ein Verfahren zum Schalten von Optical Channels unterschiedlicher Multiplexebenen anzugeben.

Die Aufgabe wird hinsichtlich des Crossconnects gelöst durch die Merkmale des Anspruchs 1 und hinsichtlich des Verfahrens durch die Merkmale des Anspruchs 7. Vorteilhafte Ausgestaltungen sind den abhängigen Ansprüchen zu entnehmen.

Die Erfindung hat den Vorteil, daß der Crossconnect flexibel erweiterbar ist und hinsichtlich Kapazität und Anzahl der einzelnen Eingang/Ausgangs-Anschlüsse an die vorgesehene Verwendung angepaßt werden kann.

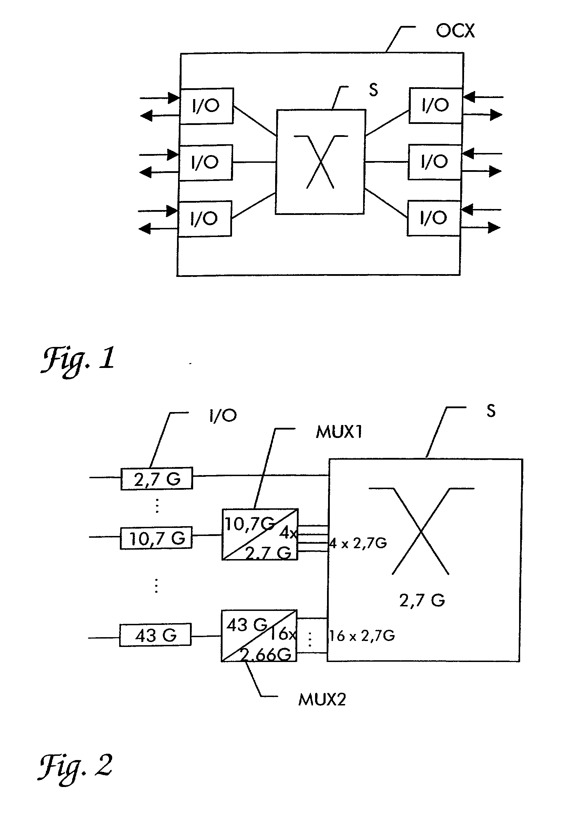

Im folgenden wird die Erfindung in einem Ausführungsbeispiel anhand der Figuren 1 und 2 näher erläutert. Es zeigt:
Figur 1: den schematischen Aufbau eines optischen Crossconnects und
Figur 2: den Aufbau des erfindungsgemäßen Crossconnects.

In Figur 1 ist das übliche Design eines Crossconnects OCX dargestellt. Er enthält eine Anzahl von optischen Eingangs/Ausgangs-Anschlüssen I/O, die alle mit einer Schaltmatrix S verbunden sind. Die Schaltmatrix S kann dadurch jeden Eingang auf jeden beliebigen Ausgang schalten. Bei bekannten 4/3/1 Crossconnects für SDH ist die Matrix eine Raum/Zeit-Schaltmatrix, die beliebige Multiplexeinheiten bis zur niedrigsten Multiplexebene von beliebigen Eingängen auf beliebige Ausgänge schalten kann. Bei bekannten optischen Crossconnects ist die Schaltmatrix eine für beliebige Signalformate transparente Raum-Schaltmatrix. Es können dabei jedoch nur gleichartige Eingänge auf gleichartige Ausgänge geschaltet werden. So würde es keinen Sinn machen, einen ATM-Eingang auf einen STM-64 Ausgang zu schalten und umgekehrt.

Entsprechend der Erfindung sind die Eingangs/Ausgangs-Anschlüsse I/O für Nachrichtensignale gemäß der Definition der Optical Channels (OCh) ausgelegt. Diese bauen auf einer Basisbitrate von 2,66 Gbit/sec auf, wobei höhere Multiplexebenen jeweils die vierfache Bitrate der Basisbitrate aufweisen. Nachrichtensignale einer höheren Multiplexebene werden durch byteweises Verschachteln von vier Nachrichtensignalen der jeweils nächst niedrigeren Multiplexebene gebildet oder enthalten direkt ein Nutzdatensignal. Beim Multiplexen von Nachrichtensignalen einer niedrigeren Multiplexebene zu einem Nachrichtensignal einer nächst höheren Multiplexebene wird byteweise gestopft, um Frequenzunterschiede der Teilsignale auszugleichen. Bislang sind zwei höhere Multiplexebenen vorgesehen mit Bitraten von 10,7x Gbit/sec und 43,x Gbit/sec. Die genaue Bitrate ist noch nicht endgültig festgelegt, so daß die Bitraten an der jeweils letzten gültigen Stelle mit x bezeichnet sind. Es ist davon auszugehen, daß zukünftig noch weitere, höhere Multiplexebenen festgelegt werden.

Ein Grundgedanke der Erfindung besteht darin, eine einzige Raum-Schaltmatrix zu verwenden die lediglich Nachrichtensignale der niedrigsten Multiplexebene unterstützt und Nachrichtensignale höherer Multiplexebene über einen Multiplexer der Schaltmatrix zuzuleiten, der die Nachrichtensignale der höheren Multiplexebene in eine Anzahl (4 bzw. 16) von Nachrichtensignalen der niedrigsten Multiplexebene demultiplext. Empfangene Nachrichtensignale der niedrigsten Multiplexebene werden somit direkt der Schaltmatrix zugeleitet während Nachrichtensignale der höheren Multiplexebenen zunächst von einem Multiplexer in mehrere Nachrichtensignale der niedrigsten Multiplexebene zerlegt werden. Sollen nun eines oder mehrere Nachrichtensignale der niedrigsten Multiplexebene über die Schaltmatrix auf einen Ausgang einer höheren Multiplexebene geschaltet werden, so werden sie zunächst von der Schaltmatrix wieder dem Multiplexer zugeführt, der die Nachrichtensignale dann zu einem einzigen Nachrichtensignal der höheren Multiplexebene byteweise verschachtelt. Der Multiplexer dient also dem Zusammenspiel zwischen den Multiplexebenen.

Ein solcher Crossconnect ist in Figur 2 dargestellt. Er weist eine Reihe von Eingangs/Ausgangs-Anschlüssen IO1, IO2, IO3 für optische Nachrichtensignale der unterschiedlichen Multiplexebenen auf, von denen der Übersicht halber jeweils nur einer dargestellt ist. Die Eingangs/Ausgangs-Anschlüsse des Crossconnects lassen sich in drei Gruppen unterteilen: eine erste Gruppe von Anschlüssen IO1 für Nachrichtensignale der untersten Multiplexebene mit einer Bitrate von 2,66 Gbit/sec, eine zweite Gruppe von Anschlüssen IO2 für Nachrichtensignale der zweiten Multiplexebene mit einer Bitrate von 10,7x Gbit/sec sowie eine dritte Gruppe von Anschlüssen für Nachrichtensignale der höchsten Multiplexebene mit einer Bitrate von 43,x Gbit/sec.

Eine Schaltmatrix S ist zum Schalten von Nachrichtensignalen der untersten Multiplexebene mit einer Bitrate von 2,66 Gbit/sec vorgesehen und angepaßt. An diese Schaltmatrix S sind die Eingangs/Ausgangs-Anschlüsse der ersten Gruppe IO1 für Nachrichtensignale der untersten Multiplexebene direkt angeschlossen. Desweiteren enthält der Crossconnect einen ersten Multiplexer MUX1 und einen zweiten Multiplexer MUX2.

Der erste Multiplexer MUX1 ist zum Multiplexen und entsprechenden Demultiplexen von Nachrichtensignalen der untersten Multiplexebene in Nachrichtensignale der zweiten, mittleren Multiplexebene vorgesehen. Der zweite Multiplexer MUX2 ist zum Multiplexen und entsprechenden Demultiplexen von Nachrichtensignalen der untersten Multiplexebene in Nachrichtensignale der höchsten Multiplexebene vorgesehen. Der Multiplexer MUX1 weist vier Anschlüsse für Nachrichtensignale der niedrigeren Multiplexebene auf sowie einen Anschluß für Nachrichtensignale der mittleren Multiplexebene. Die vier niederbitratige Anschlüsse sind jeweils mit Anschlüssen der Raum-Schaltmatrix S verbunden und an den hochbitratigen Anschluß ist ein Eingangs/Ausgangs-Anschluß der zweiten Gruppe IO2 für Nachrichtensignale der mittleren Multiplexebene angeschlossen. Analog dazu weist Multiplexer MUX2 sechzehn Anschlüsse für Nachrichtensignale der niedrigeren Multiplexebene auf sowie einen Anschluß für Nachrichtensignale der höchsten Multiplexebene. Die sechzehn niederbitratige Anschlüsse sind wiederum jeweils mit Anschlüssen der Raum-Schaltmatrix S verbunden und an den hochbitratigen Anschluß ist ein Eingangs/Ausgangs-Anschluß der dritten Gruppe IO3 für Nachrichtensignale der mittleren Multiplexebene angeschlossen.

Die Funktion des Crossconnects ist folgende: Die Schaltmatrix schaltet Verbindungen für Nachrichtensignale der niedrigsten Multiplexebene zwischen beliebigen Anschlüssen der Matrix. Der Schaltzustand der Matrix wird dabei von einer nicht gezeigten Steuerungseinrichtung über ein Netzwerkmanagementsystem bestimmt.

An den Anschlüssen der ersten Gruppe IO1 werden Nachrichtensignale mit einer Bitrate von 2,66 Gbit/sec empfangen. Soll ein Nachrichtensignal von einem solchen Anschluß auf einen gleichartigen Anschluß derselben Gruppe IO1 geschaltet werden, so schaltet die Schaltmatrix S2 dieses Nachrichtensignal direkt auf den betreffenden Anschluß. Nachrichtensignale höherer Multiplexebenen, d.h. solche von Eingangs/Ausgangs-Anschlüssen der zweiten oder dritten Gruppe IO2, IO3 für Nachrichtensignale der mittleren Multiplexebene, werden zunächst von dem jeweils zwischen Eingangs/Ausgangs-Anschluß und Schaltmatrix S befindlichen Multiplexer MUX1 oder MUX2 in Nachrichtensignale der niedrigsten Multiplexebene gedemultiplext und dann über 4 beziehungsweise 16 parallele Leitungen an die Schaltmatrix S weitergeleitet.

Es wird nun beispielhaft der Fall angenommen, daß ein Nachrichtensignal der untersten Multiplexebene (2,66 Gbit/sec) von einem Anschluß der ersten Gruppe IO1 zu einem Anschluß der zweiten Gruppe IO2 geschaltet werden soll. Dazu wird das 2,66 Gbit/sec Nachrichtensignal von der Schaltmatrix zu dem ersten Multiplexer MUX1 geschaltet. Wie bereits erwähnt hat der Multiplexer MUX1 vier Anschlüsse für Nachrichtensignale der untersten Multiplexebene und einen Anschluß für Signale der mittleren Multiplexebene. Der Multiplexer verschachtelt die an den vier Anschlüssen der untersten Multiplexebene empfangenen Nachrichtensignale byteweise zu einem Nachrichtensignal der mittleren Multiplexebene und leitet dieses weiter an den Eingangs/Ausgangs-Anschluß der zweiten Gruppe IO2 für Nachrichtensignale der mittleren Multiplexebene. Ist das beispielhaft beschriebene 2,66 Gbit/sec Nachrichtensignal das einzige Nachrichtensignal, welches auf den betreffenden Ausgang geschaltet werden soll, so verschachtelt der Multiplexer dieses mit drei Leersignalen um das Nachrichtensignal der mittleren Multiplexebene zu bilden.

Alle Schaltzustände der Schaltmatrix S und die Arbeitsweise der Multiplexer MUX1 und MUX2 sind bidirektional. So kann beispielweise auch ein Nachrichtensignal von einem Anschluß der mittleren Multiplexebene von dem ersten Multiplexer MUX1 in vier Nachrichtensignale der untersten Multiplexebene gedemultiplext und an die Schaltmatrix S weitergeleitet werden. Die Schaltmatrix S schaltet diese vier Nachrichtensignale dann zu vier verschiedenen Anschlüssen der ersten Gruppe IO1.

Soll ein Nachrichtensignal der untersten Multiplexebene von einem Anschluß der ersten Gruppe IO1 zu einem Anschluß der dritten Gruppe IO3 geschaltet werden, so wird es von der ersten Schaltmatrix S zunächst zu dem zweiten Multiplexer MUX2 geschaltet: Dieser bildet dann mit fünfzehn weiteren Nachrichtensignalen oder eventuell auch mit Leersignalen ein Nachrichtensignal der höchsten Multiplexebene, das dann an den betreffenden Ausgang der dritten Gruppe IO3 für Nachrichtensignale der höchsten Multiplexebene.

Ein Nachrichtensignal einer höheren Multiplexebene, welches direkt Nutzdaten enthält und zu einem Eingangs-/Ausgangs-Anschluß derselben Multiplexebene geschaltet werden soll, wird ebenfalls von dem zwischengeschalteten Multiplexer in vier beziehungsweise 16 Nachrichtensignale der untersten Multiplexebene zerlegt, wobei natürlich jedes der vier bzw. sechzehn Signale einen Teil der ursprünglichen Nutzdaten enthält. Über die Schaltmatrix S werden die vier bzw. sechzehn Teilsignale dann zu einem entsprechenden Multiplexer eines anderen Eingangs-/Ausgangs-Anschluß derselben Multiplexebene geschaltet, der die Teilsignale dann wieder zum ursprünglichen Nachrichtensignal zusammenfügt. Ein Nachrichtensignal einer höheren Multiplexebene wird also einfach so behandelt, als wäre es aus Nachrichtensignalen der niedrigsten Multiplexebene zusammengesetzt. Da der Dateninhalt dieser virtuellen Teilsignale durch die Schaltmatrix S nicht verändert wird, erhält man durch anschließendes Multiplexen das ursprüngliche Nachrichtensignal wieder zurück.

Ebenso wird bei einem Nachrichtensignal der obersten Multiplexebene, welches tatsächlich aus vier Nachrichtensignale der mittleren Multiplexebene besteht, angenommen, es bestünde aus sechzehn Nachrichtensignalen der untersten Multiplexebene. Jeweils vier solcher virtueller Teilsignale, die zu einem Nachrichtensignal der mittleren Multiplexebene gehören, werden dann von der Schaltmatrix S parallel zu dem Multiplexer MUX1 geleitet, der die vier virtuellen Teilsignale dann wieder zu einem Nachrichtensignal der mittleren Multiplexebene zusammenfügt. Dies ist möglich, da Nachrichtensignale einer höheren Multiplexebene durch byteweises Multiplexen aus Nachrichtensignalen einer niedrigeren Multiplexebene gebildet werden.

Ein Nachrichtensignal einer höheren Multiplexebene wird somit durch inverses Multiplexen in Teilsignale zerlegt, die dann einzeln durch die Matrix geschaltet werden. Mit inversem Multiplexen wird einen Verfahren bezeichnet, ein Signal hoher Datenrate über mehrere Signale kleinerer Datenrate zu übertragen.

Die Schaltmatrix S ist vorteilhaft als elektrische Schaltmatrix ausgeführt. Ebenso arbeiten die Multiplexer elektrisch. Die Eingangs/Ausgangs-Anschlüsse empfangen ein optisches Signal und wandeln es in ein elektrisches um. Vorteilhaft ist der erfindungsgemäße Crossconnect modular in Form von Steckkarten aufgebaut. Dadurch kann er flexibel erweitert werden, z.B. durch hinzufügen weiterer Multiplexer-Steckkarten und Matrixsteckkarten.

Die Verwendung von zwei Multiplexern soll keine Beschränkung für die Erfindung darstellen. Vielmehr können auch mehrere gleichartige Multiplexer gleichzeitig zwischen die Schaltmatrix S und die Eingangs/Ausgangs-Anschlüsse der zweiten oder dritten Gruppe IO2, IO3 angeschlossen sein. Dies ist bei großen Schaltmatrizen mit einer Schaltkapazität von mehreren Dutzend Nachrichtensignalen vorteilhaft, damit gleichzeitig mehrere Gruppen von Anschlüssen einer unteren Multiplexebene mit Anschlüssen einer höheren Multiplexebene verbunden werden können. Dabei ist zu beachten, daß jeweils für einen Eingangs/Ausgangs-Anschluß einer höheren Multiplexebene ein eigener Multiplexer vorhanden ist. Der Multiplexer kann somit vorteilhaft auch in dem jeweiligen Eingangs/Ausgangs-Anschluß integriert sein.

## Patentansprüche

1. Optischer Crossconnect (OCX) zum Schalten von Verbindungen in einem optischen Übertragungsnetz, in dem optische Nachrichtensignale unterschiedlicher Multiplexebenen mit jeweils festgelegter Bitrate gesendet werden können, wobei Nachrichtensignale einer höheren Multiplexebene aus Nachrichtensignalen einer niedrigeren Multiplexebene zusammengesetzt sind oder direkt ein Nutzdatensignal enthalten; der Crossconnect enthält:
- eine Anzahl von Eingangs/Ausgangs-Anschlüssen (IO1, IO2, IO3) die jeweils angepaßt sind, Nachrichtensignale einer bestimmten Multiplexebene zu senden und zu empfangen, und
- eine mit den Eingangs/Ausgangs-Anschlüssen (IO1, IO2, IO3) verbundene Schaltmatrix (S),
**dadurch gekennzeichnet, daß**
die Schaltmatrix (S) eine Raumschaltmatrix ist, die angepaßt ist, Nachrichtensignale der niedrigsten Multiplexebene zu schalten, und daß Eingangs/Ausgangs-Anschlüsse (IO1, IO2, IO3) höherer Multiplexebenen über einen Multiplexer (MUX1, MUX2) an die Schaltmatrix angeschlossen sind, der angepaßt ist, eine Anzahl von der Schaltmatrix (S) empfangener Nachrichtensignale der niedrigsten Multiplexebene zu einem Nachrichtensignal der entsprechenden höheren Multiplexebene zu multiplexen und ein von dem jeweiligen Eingangs/Ausgangs-Anschluß (IO1, IO2, IO3) empfangenes Nachrichtensignal der höheren Multiplexebene in eine Anzahl Nachrichtensignale der niedrigsten Multiplexebene zu demultiplexen und diese einzeln an die Schaltmatrix (S) weiterzuleiten.

2. Optischer Crossconnect (OCX) nach Anspruch 1, bei dem die Schaltmatrix eine transparente Raumschaltmatrix ist.

3. Optischer Crossconnect (OCX) nach Anspruch 2, bei dem die Schaltmatrix eine optische Raumschaltmatrix ist.

4. Optischer Crossconnect (OCX) nach Anspruch 2, bei dem die Schaltmatrix eine elektrische Raumschaltmatrix ist.

5. Optischer Crossconnect (OCX) nach Anspruch 1, bei dem jeweils Anschlüsse für eine niedrigsten Hierarchieebene mit einer Bitrate von 2,66 Gbit/sec und zwei höhere Hierarchieebenen mit jeweils einem Vierfachen der Bitrate der nächst niedrigen Hierarchieebene vorgesehen sind, bei dem Eingangs/Ausgangs-Anschlüsse (IO2) der mittleren Multiplexebene über einen ersten Multiplexer (MUX1) an die Schaltmatrix angeschlossen sind, wobei der erste Multiplexer (MUX1) angepaßt ist vier Nachrichtensignale der niedrigsten Hierarchieebene zu einem Nachrichtensignal der mittleren Hierarchieebene zu multiplexen und umgekehrt und bei dem Eingangs/Ausgangs-Anschlüsse (IO3) der obersten Multiplexebene über einen zweiten Multiplexer (MUX2) an die Schaltmatrix angeschlossen sind, wobei der zweite Multiplexer (MUX2) angepaßt ist sechzehn Nachrichtensignale der niedrigsten Hierarchieebene zu einem Nachrichtensignal der höchsten Hierarchieebene zu multiplexen und umgekehrt.

6. Optischer Crossconnect (OCX) nach Anspruch 1, bei dem die Baugruppen modular in Form von Steckkarten ausgeführt sind.

7. Verfahren zum Schalten von optische Nachrichtensignalen unterschiedlicher Multiplexebenen mit jeweils festgelegter Bitrate, wobei Nachrichtensignale einer höheren Multiplexebene aus Nachrichtensignalen einer niedrigeren Multiplexebene zusammengesetzt sind oder direkt ein Nutzdatensignal enthalten, mit den Schritten:
- Empfangen eines optischen Nachrichtensignals;
- für den Fall, daß das optische Nachrichtensignal ein Nachrichtensignal einer höheren Multiplexebene ist, Zuleiten des Nachrichtensignals zu einem Multiplexer (MUX1, MUX2) und Demultiplexen des Nachrichtensignals in eine Anzahl Nachrichtensignale der niedrigsten Multiplexebene,
- Zuleiten der Nachrichtensignale der niedrigsten Multiplexebene an eine Schaltmatrix (S);
- Feststellen zu welchem Ausgang das empfangene Nachrichtensignal geschaltet werden soll;
- für den Fall, daß das Nachrichtensignal zu einem Ausgang geschaltet werden soll, der die niedrigste Hierarchieebene unterstützt, Schalten des Nachrichtensignals zu dem betreffenden Ausgang und
- für den Fall, daß das Nachrichtensignal zu einem Ausgang geschaltet werden soll, der eine höhere Hierarchieebene unterstützt,
- Schalten des Nachrichtensignals zu einem Multiplexer (MUX1, MUX2);
- Multiplexen des Nachrichtensignals zu einem Nachrichtensignal der höheren Hierarchieebene
- Weiterleiten des Nachrichtensignals zu dem betreffenden Ausgang.
